Europäisches Patentamt

European Patent Office

Office européen des brevets

(19)

(11) Veröffentlichungsnummer: **0 293 473 B1**

(12) # EUROPÄISCHE PATENTSCHRIFT

(45) Veröffentlichungstag der Patentschrift: **29.07.92**

(51) Int. Cl.⁵: **F16H 55/08**

(21) Anmeldenummer: **87900731.8**

(22) Anmeldetag: **03.11.86**

(86) Internationale Anmeldenummer:
**PCT/SU86/00110**

(87) Internationale Veröffentlichungsnummer:
**WO 88/03623 (19.05.88 88/11)**

(54) **ZAHNRADGETRIEBE MIT GEMISCHTYP-EINGRIFF.**

(43) Veröffentlichungstag der Anmeldung:
**07.12.88 Patentblatt  88/49**

(45) Bekanntmachung des Hinweises auf die
Patenterteilung:
**29.07.92 Patentblatt  92/31**

(84) Benannte Vertragsstaaten:
**DE FR GB IT SE**

(56) Entgegenhaltungen:
**SU-A- 240 428**
**SU-A- 929 915**
**SU-A- 929 917**
**SU-A- 1 075 041**

(73) Patentinhaber: **ROSTOVSKY GOSUDARSTVEN-
NY UNIVERSITET IMENI M.A. SUSLOVA
ul. Engelsa, 105
Rostov-na-Donu, 344711(SU)**

(72) Erfinder: **ZHURAVLEV, German Alexandrovich
ul. Verkhne-Nolnaya, 9-10
Rostov-na-Donu, 344081(SU)**

(74) Vertreter: **Eitle, Werner, Dipl.-Ing. et al
Hoffmann, Eitle & Partner Patentanwälte Arabellastrasse 4
W-8000 München 81(DE)**

EP 0 293 473 B1

**Beschreibung**

Die vorliegende Erfindung bezieht sich auf das Gebiet des Maschinenbaus und betrifft insbesondere ein Radgetriebe mit Mischverzahnung.

Die Erfindung kann am vorteilhaftesten bei hochbeanspruchten Triebwerken von Schiffen, Flugzeugen, landwirtschaftlichen und sonstigen Maschinen benutzt werden.

Zugrundeliegender Stand der Technik

Ein Radgetriebe mit Mischverzahnung zeichnet sich durch eine Ausführung der Zahnprofilflanke aus, die sich aus mehreren Strecken zusammensetzt, welche mit Rücksicht auf die Besonderheiten ihres Spannungs- und Verformungszustands nach verschiedenen Gesetzen ausgebildet sind.

Das Zahnprofil der Mischverzahnung weist am Zahnkopf und Zahnfuß ähnlich der Verzahnung vom Nowikow-Typ ausgebildete Strecken sowie eine sie verbindende, in Form einer Evolvente ausgebildete Strecke (im folgenden als Evolventenstrecke bezeichnet) auf, die mit dem theoretischen Profil übereinstimmt , das ein vorgegebenes Übersetzungsverhältnis beim Eingriff absolut starrer Zahnräder gewährleistet.

Bedingt durch die Konstruktion des Zahnes sind über diesen Strecken bei seiner Beanspruchung unterschiedliche spezifische Steifigkeiten gegeben, was eine höhere Beanspruchung der Evolventenstrecke ermöglicht, ferner sind unterschiedliche Werte der im Zahnkörper auftretenden Zughauptspannung, der höchste Wälzbeanspruchung der maximalen Gleitgeschwindigkeit und der Höchsttemperatur im Eingriffsgebiet gegeben. Dadurch werden unterschiedliche Reibungsverluste, unterschiedliche Arbeitsfähigkeit der betreffenden Strecken nach den Kriterien der Ermüdungsfestigkeit des Zahnes unter Einwirkung der Biegekraft, der Ermüdungsfestigkeit unter Wirkung der Wälzbeanspruchungen der Freßverschleißfestigkeit, der Wärmefestigkeit und des mechanischen Verschleißes bedingt.

Da die Strecken des Zahnprofils des Radgetriebes mit Mischverzahnung kinematisch miteinander nicht gekoppelt sind, hat das Radgetriebe eine höhere axiale Eingriffsdauer der Zähne und deren im allgemeinen günstige Form eine erhöhte Tragfähigkeit der Zähne in jedem Eingriffsgebiet. Dies gestattet, die zu übertragende Belastung im Vergleich zu einfachen Verzahnungen zu steigern.

So führen eine im Vergleich zur einfachen Evolventenverzahnung geringe Länge der Berührungslinie der Evolventenstrecken der Zähne und ein größerer Eingriffslinienwinkel zu einer verminderten Ungleichmäßigkeit der Lastverteilung längs dieser Linie und zur Verringerung des maximalen Kraftangriffhebelarms und zur Senkung der maximalen Gleitgeschwindigkeit. Dadurch sowie dank der Unempfindlichkeit gegen Achsabstandfehler werden nicht nur eine hohe Arbeitsfähigkeit der Evolventenstrecken nach den Kriterien der Ermüdungsfestigkeit unter der Wirkung der Biegekraft und der Freßverschleißfestigkeit der Zähne, sondern auch eine relativ zu jeder beliebigen einfachen Verzahnungsart (darunter auch zur Evolventenverzahnung) erhöhte Ermüdungsfestigkeit unter Einwirkung der Wälzbeanspruchungen im Wälzpunktbereich gewährleistet.

So führt ein im Vergleich zu der einfachen Nowikow-Verzahnung geringer Krümmungsradius der Strecke, die am Zahnkopf eine Strecke des Typs der Nowikow-Verzahnung mit einer Evolventenstrecke bindet und einen Zugspannungskonzentrator darstellt, zu einem kürzeren Hebelarm des Biegekraftangriffes, zur Zahnkopfdickervergrößerung am Wälzkreis und zur Zahnfußdickenvergrößerung im Normalschnitt und zur Vergrößerung der eingreifenden Zahnfläche. Die Strecken des Typs der Nowikow-Verzahnung zeichnen sich daher nicht nur durch hohe Arbeitsfähigkeit aus, die durch das Kriterium der Ermüdungsfestigkeit unter der Wirkung der Wälzbeanspruchungen bestimmt wird, sondern auch durch erhöhte Ermüdungsfestigkeit unter Einwirkung der Biegekraft.

Im Vergleich zu dem Radgetriebe mit Evolventen- bzw. Nowikow-Verzahnung hat das Radgetriebe mit Mischverzahnung ein erhöhtes Belastungsvermögen nach den Kriterien der Freßverschleißfestigkeit, der Wärme- und Ermüdungsfestigkeit der Zähne unter der Wirkung der Biegekraft, einen erhöhten Wirkungsgrad aufgrund einer höheren Beanspruchung der Evolventenstrecken. Diese Bauart des Radgeriebes mit Mischverzahnung wurde jedoch in Industrie wegen begrenzte Möglichkeiten der Erhöhung des Belastungsvermögens, die mit der verhältniswidrigen Beanspruchung einzelner Zahnstrecken verbunden ist, nicht weitverbreitet:

- Die Evolventenstrecken sind hinsichtlich der Ermüdungsfestigkeit unter der Wirkung der Wälzbeanspruchungen überbelastet, hinsichtlich der Freßverschleißfestigkeit, der Ermüdungsfestigkeit unter Einwirkung der Biegekraft und des mechanischen Verschleißes aber unterbelastet; sie sind unempfindlich gegen Achsabstandfehler;
- die Strecken der Nowikow-Verzahnung sind hinsichtlich der Freßverschleißfestigkeit, der Ermüdungsfestigkeit unter der Wirkung der Biegekraft und des mechanischen Verschleißes überbelastet, ihre Tragfähigkeit hängt von der Größe des Achsabstandfehlersab;hinsichtlich der Ermüdungsfestigkeit unter Einwirkung der Wälzbeanspruchungen sind sie aber unterbelastet.

Bei Versuchen, ein Radgetriebe mit Mischverzahnung von höherer Belastbarkeit zu entwickeln, entstand ein Radgetriebe (s. SU-A-929 915, bekannt gemacht im Blatt "Otkrytia, izobretenia, promyshlennye obraztsy, tovarnye znaki" /"Entdeckungen, Erfindungen, Geschmacksmuster, Warenzeichen"/, Nr. 19, 1982).

Das bekannte Radgetriebe wird durch Zahnräder gebildet, wobei die Zahnprofilflanke jedes dieser Zahnräder eine Strecke aufweist, die ungefähr in Form einer Evolvente ausgeführt und mit zwei als Zahnprofil der Nowikow-Verzahnung ausgebildeten Strecken verbunden ist. Die Evolventenstrecke liegt in einem Gebiet, das durch die Wälzbahn des Zahnrades verläuft, und die beiden verbleibenden Strecken befinden sich außerhalb dieser Wälzbahn.

In den als Zahnprofil der Nowikow-Verzahnung ausgebildeten Strecken fällt die Zahnprofilflanke mit der Flanke des theoretischen Profils zusammen, während die Evolventenstrecke eine Abweichung von dem theoretischen Profil in Richtung der Zahndickenverkleinerung aufweist. Diese Abweichung wird als Höchstwert des möglichen Verschleißes der Zähne in den als Zahnprofil der Nowikow-Verzahnung ausgebildeten Profilstrecken ermittelt.

Dieses Radgetriebe funktioniert als Radgetriebe vom Nowikow-Typ und gewährleistet unbedeutende Erhöhung der Belastungsfähigkeit nur dank der Verringerung der maximalen Wälzbeanspruchungen im Zahnkörper dadurch, daß die Evolventenstrecken außer Eingriff sind.

Um die Zugoberspannungen, die am Zahnkopf in der die Strecke der Nowikow-Verzahnung mit der Evolventenstrecke verbindenden Strecke auftreten, zu verringern, wird die untere Grenze dieser Strecke in einer gewissen Entfernung von dem Teilkreis angeordnet, die als 0,15fache Zahnkopfhöhe gegeben ist. Das führt zur mehr als 20%igen Erhöhung der Ermüdungsfestigkeit der Zähne unter Einwirkung der Biegekraft, wenn das Radgetriebe als Radgetriebe vom Nowikow-Typ arbeitet.

Bei verschlechterten Schmierbedingungen des Radgetriebes, was zu einem intensiven Verschleiß der Zähne führt, nehmen auch die Evolventenstrecken der Zähne am Eingriff teil. Das führt zu einer Neuverteilung der Belastung in den Strecken der Zähne und in Folge davon zur Senkung der Beanspruchung und der Wärmespannung der Strecken der Nowikow-Verzahnung, was dem Radgetriebe eine erhöhte Verschleißfestigkeit verleiht.

Der Anstieg des Belastungsvermögens dieses Radgetriebes ist durch die Ermüdungsfestigkeit der Zähne unter der Wirkung der Biegekraft im Punktverzahnungsgebiet beschränkt. Ein solches Radgetriebe hat einen geringeren Wirkunsgrad, weil die Evolventenstrecken der Zähne nicht am Eingriff teilnehmen. Letzteres verkürzt die Eingriffsdauer der Zähne und erhöht ihre Wärmespannung.

Ebenso wie beim Radgetriebe des Nowikow-Typs nimmt etwa 40% der Zahnfläche bei dem bekannten Radgetriebe nicht am Eingriff teil, wodurch die Ermüdungsfestigkeit der Zähne unter Einwirkung der Wälzbeanspruchung herabgesetzt wird. Wegen ungleichmäßiger Lastverteilung über die Zahnkranzbreite unter den am Eingriff teilnehmenden Zähnen und hoher Geschwindigkeiten der Axialverschiebung der Eingriffsgebiete wird die Lage des Angriffspunkts der resultierenden Kraft über die Kranzbreite stark geändert, dynamische Vorgänge angeregt sowie vibroakustische Kenndaten des Radgetriebes verschlechtert. Die Ungleichmäßigkeit der Lastverteilung und die kurze Eingriffsdauer der Zähne führen zur Vergrößerung der axialen Außenabmessungen des Getriebes oder der Axialkomponente der Eingriffskräfte, zur Verkleinerung der Durchmesserteilung und in Folge davon zu einer begrenzten Steigerung der Belastbarkeit des Getriebes, zur Herabsetzung der Arbeitsfähigkeit der Lager wegen der Lageänderung der resultierenden Kraft über die Kranzbreite des Zahnrades.

Bei Versuchen, die Belastbarkeit des Getriebes durch die Erhöhung der Ermüdungsfestigkeit der Zähne unter der Wirkung der Biegekraft zu steigern, entstand ein Radgetriebe mit Mischverzahnung (s. SU-A-1 075 041, bekanntgemacht im Blatt "Otkrytia, izobretenia, promyshlennye obraztsy, tovarnye znaki"/"Entdeckungen, Erfindungen, Geschmacksmuster, Warenzeichen"/, Nr. 7, 1984).

Das bekannte Radgetriebe ist durch Zahnräder gebildet, wobei die Zahnprofilflanke jedes dieser Zahnräder eine Strecke aufweist, die ungefähr in Form einer Evolvente ausgeführt und mit zwei als Zahnprofil der Nowikow-Verzahnung ausgebildeten Strecken verbunden ist. Die Evolventenstrecke liegt in einem Gebiet, das durch die Wälzbahn des Zahnrades verläuft, und die beiden verbleibenden Strecken befinden sich außerhalb dieser Wälzbahn.

Zur Senkung der Zugoberspannungen, die am Zahnkopf in der die Strecke der Nowikow-Verzahnung mit der Evolventenstrecke bindenden Strecke auftreten, ist die Größe des Krümmungsradius dieser Strecke ausgehend von technologischen Möglichkeiten des Werkzeuges minimal bemessen. Die Ausführung dieser Strecke mit dem minimalen Krümmungsradius führt zur Vergrößerung der am Eingriff teilnehmenden Zahnfläche, wodurch die Belastbarkeit des Getriebes erhöht wird.

Der Anstieg der Belastbarkeit dieses Radgetriebes ist jedoch wegen der Verhältniswidrigen Beanspruchung einzelner Zahnstrecken begrenzt:

- Die Evolventenstrecken sind hinsichtlich der Ermüdungsfestigkeit unter der Wirkung der Wälzbeanspruchung überbelastet, hinsichtlich der Freßverschleißfestigkeit, der Ermüdungsfestigkeit unter Einwirkung der Biegekraft und des mechanischen Verschleißes aber unterbelastet; sie sind unempfindlich gegen Achsabstandsabweichungen des Getriebes von dem Nennwert;
- die Strecken der Nowikow-Verzahnung sind hinsichtlich der Freßverschleißfestigkeit, der Ermüdungsfestigkeit unter der Wirkung der Biegekraft und des mechanischen Verschleißes überbelastet, ihre Tragfähigkeit nimmt bei der Achsabstandsabweichung von dem Nennwert ab; hinsichtlich der Ermüdungsfestigkeit bei der Wirkung der Wälzbeanspruchung sind sie aber unterbelastet.

Offenbarung der Erfindung

Der Erfindung liegt die Aufgabe zugrunde, ein solches Radgetriebe mit Mischverzahnung zu entwickeln, bei dem die Erhöhung der Belastbarkeit, des Wirkungsgrades, die Verlängerung der Lebensdauer, die Verbesserung der vibroakustischen Kenndaten, die Verringerung des Metallaufwandes und der Außenabmessungen durch konstruktive Änderung der Profilflanke der am Eingriff teilnehmenden Zähne gewährleistet wird.

Die gestellte Aufgabe wird dadurch gelöst, daß bei einem Radgetriebe mit Mischverzahnung, das durch Zahnräder gebildet ist, deren Zahnprofilflanke eine Strecke aufweist, die ungefähr in Form einer Evolvente ausgeführt ist, sich in einem durch den Wälzkreis des Zahnrades verlaufenden Gebiet befindet und wenigstens mit einer als Zahnprofil der Nowikow-Verzahnung ausgeführten und in einem außerhalb des Wälzkreises des Zahnrades liegenden Gebiet befindlichen Strecke verbunden ist, erfindungsgemäß die am Eingriff teilnehmende Zahnprofilflanke zumindest in zwei Strecken eine Abweichung von der Flanke des theoretischen Zahnprofils in Richtung der Zahndickenvergrösserung hat.

Es ist ratsam, dass sich die Differenz der Gesamtabweichungen in den Profilflankenstrecken der ineinandergreifenden Zähne von den Flanken ihrer theoretischen Profile gemäss folgender Beziehung errechnet:

$$\delta = \frac{F_j^{0,7}}{\cos \alpha_j} * \left(\frac{1}{C_{Fj} * m} + \frac{1}{C_{Hj} * m^{2/3}}\right) - \frac{F_\epsilon}{\cos \alpha_\epsilon} * \left(\frac{1}{C_{F\epsilon} * m} + \frac{1}{C_{H\epsilon} * l_\epsilon}\right)$$

Hier bedeuten:

$\delta$ = Gesemtabweichungsdifferenz der Profilflanken in der j-ten Eingriffsstrecke der ineinandergreifenden Zähne und in ihren Evolventenstrecken ($\epsilon$) , gemessen im Normalschnitt der Zähne relativ zur Teillinie über eine mit einem der Zahnräder fluchtenden Fläche, mm;

$F_j$ = Normalkraft, die von einem in der j-ten Eingriffsstrecke am Eingriff teilnehmenden Zahnpaar aufgenommen wird; ermittelt als Funktion der Geometrie der Zahnräder, ihres Werkstoffs, der Technologie der Verfestigungs- und Schlichtbearbeitung, des Zyklogramms der äusseren Beanspruchung, N;

$F_\epsilon$ = Normalkraft, die von einem in der Evolventeneingriffsstrecke am Eingriff teilnehmenden Zahnpaare aufgenommen wird; ermittelt als Funktion der Geometrie der Zahnräder, ihres Werkstoffe, der Technologie der Verfestigungs- und Schlichtbearbeitung, des Zyklogramms der äusseren Beanspruchung, N;

$\alpha j$ = Profilwinkel im Normalschnitt der Radzähne, nach dem die Differenz $\delta$ gemessen ist, im Angriffspunkt der resultierenden Kraft in der j-ten Strecke;

$\alpha_\epsilon$ = Profilwinkel im Normalschnitt der Radzähne, nach dem die Differenz $\delta$ gemessen ist, im Schnittpunkt mit dem Wälzkreis;

m = Modul, mm;

$C_{Fj}$, $C_{F\epsilon}$ = Proportionalitätsfaktor, der bei der Ermittlung der gesamten Steifigkeit (Biege- und Schubsteifigkeit) eines in der j-ten Strecke und in der Evolventeneingriffsstrecke ($\epsilon$) am Eingriff teilnehmenden Zahnpaares berücksichtigt wird; für Stahlzahnräder ändert er sich innerhalb

$C_{Fj} = (0,7...2,0) \cdot 10^4$,

4

$$C_{F_\epsilon} = (0{,}15 ... 0{,}25) \cdot 10^6;$$

$C_{Hj}$, $C_{H_\epsilon}$ = Proportionalitätsfaktor, der bei der Ermittlung der örtlichen (Berührungs-) Steifigkeit des in der j-ten Strecke und in der Evolventeneingriffsstrecke ($\epsilon$) am Eingriff teilnehmenden Zahnpaares berücksichtigt wird; für Stahlzahnräder ändert er sich innerhalb

$C_{Hj} = (0{,}15 ... 0{,}3) \cdot 10^5$,

$$C_{H_\epsilon} = (0{,}5 ... 0{,}8) \cdot 10^5;$$

$l_c$ = Länge der Berührungslinie in den Evolventenstrecken, mm.

Durch derartige konstruktive Ausführung des Radgetriebes wird eine erhöhte Belastbarkeit der Mischverzahnung erreicht.

Dies wird durch die Ausbildung der Flankenstrecken des Zahnprofils mit einer Abweichung in Richtung der Zahndickenvergrößerung erzielt, wodurch der Zahn im Belastungszustand ein Profil erhält, das mit der Flanke des theoretischen Zahnprofils zusammenfällt, welches beim Eingriff absolut starrer Zahnräder ein vorgegebenes Übersetzungsverhältnis bewirkt. Durch die angenommene Abweichungsdifferenz in den Profilflankenteilstrecken der ineinandergreifenden Zähne stimmt die Beanspruchung der Zahnstrecken mit ihrer Tragfähigkeit überein. Beim Betrieb des Radgetriebes mit Mischverzahnung z.B. unter der Wirkung von wiederholten kurzzeitigen äußeren Spitzenbelastungen, einer Belastung mit geringem Zyklus, tiefer und hoher Temperaturen usw., wenn die Arbeitsfähigkeit der Verzahnung durch die Ermüdungsfestigkeit der Zähne unter Einwirkung der Biegekraft, die Freßverschleißfestigkeit und den mechanischen Verschleiß ihrer Flächen beschränkt ist, nehmen die Strecken der Nowikow-Verzahnung eine Last auf, die ihrer Tragfähigkeit entspricht, und bewirken daher einen Anstieg der Belastbarkeit des Radgetriebes aufgrund der Erhöhung der Beanspruchung der Evolventenstrecken der Zähne.

Durch reduzierte Wälzbeanspruchung weisen die Strecken der Nowikow-Verzahnung in der Mischverzahnung eine relativ zu jeder anderen einfachen außer Wälzpunktstehenden Verzahnung erhöhte Freßverschleißfestigkeit und Verschleißfestigkeit auf.

Beim Betrieb des Radgetriebes mit Mischverzahnung z.B. unter Bedingungen der Dauerwirkung einer gleichbleibenden Belastung usw., wenn die Arbeitsfähigkeit der Verzahnung durch die Ermüdungsfestigkeit der Zähne unter der Wirkung der Wälzbeanspruchung beschränkt ist, nehmen die Evolventenstrecken eine Last auf, die ihrer Tragfähigkeit nach dem genannten Kriterium entspricht, und bewirken daher einen Anstieg der Belastbarkeit des Radgetriebes aufgrund erhöhter Beanspruchung der Strecken der Nowikow-Verzahnung und der wirkungsvollsten Ausnutzung von Strecken, die die Wälzbahnen schneiden. Die Evolventenstrecken in der Mischverzahnung haben durch ihre Unempfindlichkeit gegen Achsabstandschwankungen und, durch ihre aufgrund der Vergrößerung des Eingriffslinienwinkels verkürzte Länge der Berührungslinie, eine gegenüber jeder einfachen Verzahnungsart (darunter auch zur Evolventenverzahnung) erhöhte Ermüdungsfestigkeit unter der Wirkung der Wälzbeanspruchung im Wälzpunktbereich.

Durch die Ausführung der Zahnprofilteilstrecken gemäß verschiedenen Verzahnungsgesetzen und die empfehlenswerte Abhängigkeit der Ermittlung der Abweichungsdifferenz zwischen den Profilflanken der ineinandergreifenden Zähne wird eine solche Zahnprofilform in jeder Strecke erzielt, die zur Erhöhung ihrer Tragfähigkeit führt, und die Eingriffsdauer der Zähne verlängert. Bei dem erfindungsgemäß ausgeführten Radgetriebe mit Mischverzahnung haben also die Zähne in jedem einzeln genommenen Eingriffsgebiet das rationellste Profil. Im Vergleich zu der einfachen Evolventen- und Nowikow-Verzahnung wird die Profilform der außer Wälzpunkt stehenden Strecken durch die Parameterauswahl für Evolventenstrecken, die die Wälzbahn schneiden, nicht bestimmt (wie es bei dem Evolventengetriebe erfolgt), und die Parameterauswahl für Strecken der außer Wälzpunkt stehenden Nowikow-Verzahnung schließt eine wirksame Ausnutzung von Profilstrecken, die die Wälzbahn des Zahnrades schneiden (wie es bei dem Nowikow-Getriebe der Fall ist) nicht aus Dadurch werden die Ermüdungsfestigkeit der Zähne des Radgetriebes mit Mischverzahnung unter der Wirkung der Biege- und Wälzbeanspruchung erhöht, sowie die Lebensdauer des Radgetriebes verlängert. Dabei werden die Gleichmäßigkeit der Lastverteilung unter den am Eingriff teilnehmenden Zähnen über die Zahnkranzbreite erhöht, der Lageausschlag des Angriffspunkts der resultierenden Kraft über die Zahnkranzbreite und -länge sowie die Anregung von dynamischen Vorgängen herabgesetzt, die vibroakustischen Kenndaten des Radgetriebes verbessert.

5

Dadurch ist es am vorteilhaftesten, das Radgetriebe mit Mischverzahnung mit einer Zahnkranzbreite $b_w$ auszuführen, die kleiner als die Achseingriffsteilung der Zähne ist $b_w \approx 0,7 \ P_x$, was gestattet, die Außenabmessungen und den Metallaufwand dieses Radgetriebes mit Mischverzahnung zu reduzieren, das Modul der Zähne zu vergrößern und somit ihre Wälzbeanspruchung und Biegespannungen zu senken, die Größe der Axialkomponente der Eingriffskräfte und die Lagerbelastung zu vermindern, und in Folge davon den weiteren Anstieg der Belastbarkeit der Verzahnung und Getriebelagerungen zu bewirken.

Bei der Begrenzung des Axialmaßes des Radgetriebes oder der Größe der Axialkomponente in den Verzahnungskräften ist es zweckmäßig, wenn sich die als Zahnprofil der Nowikow-Verzahnung ausgebildete Strecke der ersten Profilflanke am Zahnkopf und die als Zahnprofil der Nowikow-Verzahnung ausgeführte, an der relativ zur Achse des Zahnprofils entgegengesetzten Seite angeordnete Strecke der zweiten Profilflanke am Zahnfuß befindet, wobei die Abweichung der Profilflanke des in der annähernd in Form einer Evolvente ausgebildeten Strecke am Eingriff teilnehmenden Zahnes im wesentlichen der Abweichung der Profilflanke des in der als Zahnprofil der Nowikow-Verzahnung ausgebildeten Strecke am Eingriff teilnehmenden Zahnes gleicht.

Durch derartige konstruktive Ausführung des Zahnprofils wird die Profilüberdeckung der Evolventenstrecken erhöht. Das wird durch eine Vergrößerung der Evolventenstrecke des Zahnprofils z.B. in Richtung des Zahnkopfes bzw. -fußes erreicht. Dadurch läßt sich das Radgetriebe mit Mischverzahnung herstellen, dessen Zahnkranzbreite $b_w$ kleiner als die 0,7fache Achseingriffsteilung der Zähne ist: $b_w < 0,7 \ P_x$. Dabei sind die Zahnprofile des Zahnrades und des Ritzels asymmetrisch ausgeführt und bei der Bearbeitung auf Abwälzmaschinen mit ein und demselben Werkzeug gefertigt.

Es ist nötig, daß die als Zahnprofil der Nowikow-Verzahnung ausgebildete und am Zahnkopf befindliche Strecke der Profilflanke mit der annähernd nach einer Evolvente ausgebildeten Strecke der Profilflanke über eine erste krummlinige Strecke verbunden ist, deren Krümmung das entgegengesetzte Vorzeichen bezüglich der Krümmung des Zahnprofils der Nowikow-Verzahnung hat, während die zweite, als Zahnprofil der Nowikow-Verzahnung ausgebildete und am Zahnfuß befindliche Strecke der Profilflanke mit der annähernd in Form einer Evolvente ausgeführten Profilflankenstrecke über eine zweite krummlinige Strecke verbunden ist, deren Krümmung das entgegengesetzte Vorzeichnen der Krümmung des Zahnprofils der Nowikow-Verzahnung besitzt, wobei der Krümmungsradius der zweiten krummlinigen Strecke größer als der Krümmungsradius der ersten Strecke aus dem Verhältnis

$$0,2 \cdot m \leqq \rho_{P_2} \leqq m$$

bemessen ist. Hierin bedeuten

m = Modul;

$$\rho_{P_2}$$

= Krümmungsradius der zweiten krummlinigen Strecke, die die annähernd nach einer Evolvente ausgebildete Strecke mit der nach der Nowikow-Verzahnung ausgebildeten Strecke am Zahnfuß verbindet.

Diese konstruktive Ausführung des Zahnprofils des Ritzels und des Zahnrades führt zu einer noch höheren Belastbarkeit des Radgetriebes aufgrund der Vergrößerung der am Eingriff teilnehmenden Zahnfläche, was durch die Teilnahme der ersten und zweiten krummlinigen Strecken am Eingriff erreicht wird. Dies erklärt sich durch Verformungen der Zähne und Achsabstandfehler. Begrenzungen bei der Auswahl des Krümmungsradius der zweiten krummlinigen Strecke sind darauf zurückzuführen, daß man die Entstehung von geometrischer Interferenz in den Evolventenstrecken und in den Strecken des Typs der Nowikow-Verzahnung vermeiden muß. Bei der Ausführung der zweiten krummlinigen Strecke mit einem Krümmungsradius

$$\rho_{P_2}{'}$$

der kleiner als 0,2 m ist, tritt eine geometrische Interferenz der Evolventenstrecken und der Strecken des Typs der Nowikow-Verzahnung auf, welche die Belastbarkeit des Radgetriebes senkt. Bei der Auswahl des

6

Krümmungsradius

$$\rho_{P_2}$$

größer als m werden die am Eingriff teilnehmenden Zahnflächen verkleinert und die Belastbarkeit des Radgetriebes herabgesetzt.

Es ist erwünscht, daß die nach dem Typ der Nowikow-Verzahnung ausgebildete Profilstrecke am Zahnfuß mit Bögen von zwei Kreisen umschrieben wird, die miteinander sanft konjugiert sind und in einer Entfernung voneinander liegende Krümmungsmittelpunkte haben, deren Entfernung aus folgender Formel errechnet wird:

$$1 = (0,3\ldots1,2)\,(\rho_{f_2} - \rho_a) \cdot \left(\frac{\Delta a'_w}{|\Delta a''_w|} \cdot \frac{\sin\alpha_{max} - \sin\alpha_N}{\sin\alpha_N - \sin\alpha_{min}} - 1\right)$$

Hierin bedeuten

$l$ = Krümmungsmittelpunktabstand der konjugierten Kreisbögen der Profilstrecke am Zahnfuß, der längs der Gesamtnormalen von dem Krümmungsmittelpunkt des Bogens der Profilstrecke am Zahnfuß aus abgemessen wird, der sich näher am Zahngrund befindet: mit $1 > 0$ wird er in der Richtung von dem Zahnprofil aus und mit $1 < 0$ in der Richtung nach dem Zahnprofil abgemessen;

$$\rho_{f_2}$$

= Krümmungsradius des Bogens der Strecke der Profilflanke an dem näher am Zahngrund befindlichen Zahnfuß;

$\rho_a$ = Krümmungsradius der Strecke der Profilflanken am Zahnkopf;

$\Delta a'_w$ = Wert des Achsabstandfehlers des Radgetriebes in Richtung der Abstandsvergrößerung;

$\Delta a''_w$ = Wert des Achsabstandfehlers des Radgetriebes in Richtung der Abstandsverkleinerung;

$\alpha_N$ = Wälzeingriffswinkel der als Zahnprofil der Nowikow-Verzahnung ausgebildeten Strecke der Flanke im Berührungspunkt;

$\alpha_{max}$ = Maximalwert des Wälzeingriffswinkels der als Zahnprofil der Nowikow-Verzahnung ausgebildeten Flankenstrecke am Zahnkopf;

$\alpha_{min}$ = Minimalwert des Wälzeingriffswinkels der als Zahnprofil der Nowikow-Verzahnung ausgebildeten Flankenstrecke am Zahnfuß.

Durch solche konstruktive Ausführung des Zahnprofils wird eine niedrige Empfindlichkeit der Strecken der Nowikow-Verzahnung gegen die Abweichungen $\Delta a'_w > 0$ und $\Delta a''_w < 0$ des Achsabstands $a_w$ des Radgetriebes gesichert, welche Abweichungen beispielsweise durch Erwärmungsverzüge des Gehäuses und der Bestandteile des Untersetzungsgetriebes während des Betriebes verursacht werden, insbesondere wenn

$$\Delta a'_w = \Delta a''_w$$

ist.

Dadurch wird bei der Achsabstandsänderung die Eingriffssicherheit der nach dem Typ der Nowikow-Verzahnung ausgebildeten Strecken erhöht.

Wird die gegenseitige Entfernung der Krümmungsmittelpunkte in einem Abstand $1$ willkürlich vorgegeben, z.B. $1 = 0$, so werden die Strecken der Nowikow-Verzahnung gegen Achsabstandfehler empfindlich. Mit dem absoluten Betrag nach unterschiedlichen Achsabstandfehlern $\Delta a'_w > 0$ und $\Delta a''_w < 0$ findet eine Eingriffsstörung in einem Teil der Strecke der Nowikow-Verzahnung statt, der dem im absoluten Betrag größeren Achsabstandfehler entspricht, oder es treten erhöhte Wälzbeanspruchungen in einem anderen Teil dieser Strecke auf, der dem im absoluten Betrag kleineren Achsabstandfehler entspricht. Die Belastbarkeit des Radgetriebes mit Mischverzahnung nimmt in diesen Fällen ab.

Kurze Beschreibung der Zeichnungen

Nachstehend werden andere Ziele und Vorteile der Erfindung an Hand eines konkreten Ausführungsbeispiels und der beigefügten Zeichnungen näher erläutert; es zeigen:

Fig.1 in schematischer Darstellung ein erfindungsgemäß ausgeführtes Schrägzahn-, Stirnradgetriebe mit Mischverzahnung, in Isometrie;

Fig.2 einen Schnitt durch die Zahnräder, der in einer Zahnradstirnebene erhalten ist, die durch den Berührungspunkt der Strecken der Nowikow-Verzahnung an Zahnfuß des Ritzels und am Zahnkopf des Zahnrades verläuft, im vergrößerten Maßstab; die Zahnräder sind im kinematischen Eingriff;

Fig.3 einen Schnitt durch die Zahnräder, der in einer Zahnradstirnebene erhalten ist, die durch den Berührungspunkt der Strecken der Nowikow-Verzahnung am Zahnkopf des Ritzels und am Zahnfuß des Zahnrades verläuft, im vergrößerten Maßstab; die Zahnräder sind im kinematischen Eingriff;

Fig.4 einen Schnitt durch die Zahnräder, der in einer Zahnradstirnebene erhalten ist, die durch den Wälzpunkt verläuft, im vergrößertem Maßstab; die Zahnräder sind im kinematischen Eingriff.

Fig.5 ein Segment des im kinematischen Eingriff stehenden Zahnrades, mit Berührungsstellen;

Fig.6 einen Schnitt durch die Zahnräder, der in einer Zahnradstirnebene erhalten ist, die durch den Mittelpunkt der Berührungsfläche der Strecken der Nowikow-Verzahnung am Zahnfuß der Ritzelzähne und am Zahnkopf der Zahnradzähne verläuft, im vergrößerten Maßstab; die Zahnräder befinden sich im Belastungszustand;

Fig.7 einen Schnitt durch die Zahnräder, der in einer Zahnradstirnebene erhalten ist, die durch den Mittelpunkt der Berührungsfläche der Strecken der Nowikow-Verzahnung am Zahnkopf der Ritzelzähne und am Zahnfuß der Zahnradzähne verläuft, im vergrößerten Maßstab; die Zahnräder befinden sich im Belastungszustand;

Fig.8 einen Schnitt durch die Zahnräder, der in einer Zahnradstirnebene erhalten ist, die durch den Wälzpunkt verläuft, im vergrößerten Maßstab; die Zahnräder befinden sich im Belastungszustand;

Fig.9 ein Segment des an dynamischen Eingriff teilnehmenden Zahnrades mit Berührungsstellen;

Fig.10 eine Ausführungsform der Profilflanke des am Eingriff teilnehmenden Zahnes;

Fig.11 Zahnelemente mit der ersten und zweiten krummlinigen Strecke;

Fig.12 ein Segment des am dynamischen Eingriff teilnehmenden Zahnrades mit Berührungsstellen;

Fig.13 eine Ausführungsform der Zahnprofilflanke;

Fig.14 einen Zahnteil des Zahnrades mit Berührungsstellen bei positivem Achsabstandfehler;

Fig.15 einen Zahnteil des Zahnrades mit Berührungsstellen bei negativen Achsabstandfenler.

Bevorzugte Ausführungsform der Erfindung

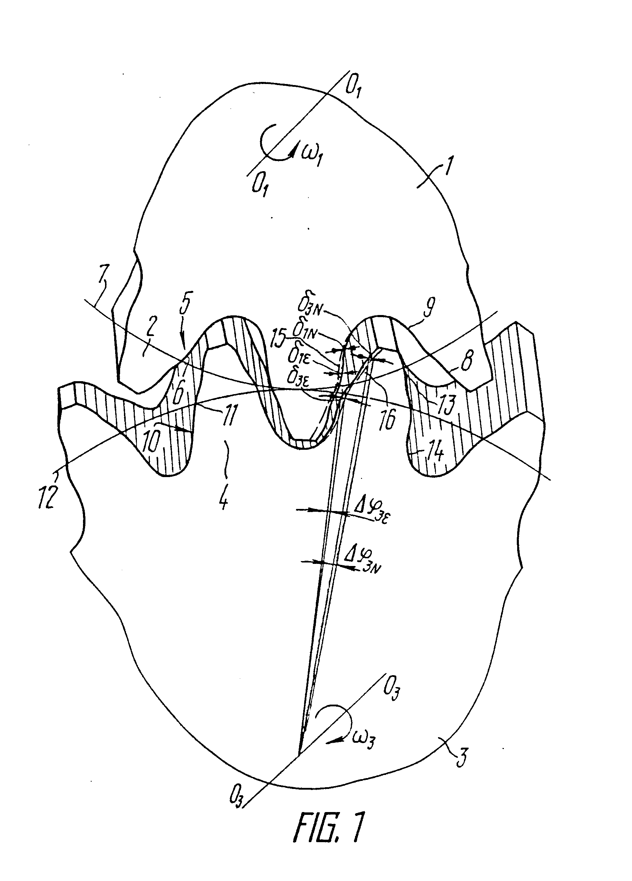

Ein erfindungsgemäß ausgeführtes und bei einem hochbeanspruchten Antrieb verwendbares Schrägzahn- Stirnradgetriebe mit Mischverzahnung ist durch ein Antriebsrad-Ritzel 1 (Fig.1) mit Zähnen 2 und ein Abtriebsrad 3 mit Zähnen 4 gebildet. Der Modul ist m = 6 mm, der Teil-Zahnschrägewinkel ist $\beta$ = 21 bis 24°.

Die Zahnräder 1 und 3 bestehen aus Stahl, wurden aufgekohlt und auf eine Härte der Zahnfläche H = HRC 58...62 gehärtet.

Die Profilflanke 5 des Zahnes 2 besitzt eine Evolventenstrecke 6, die sich in einem durch den Wälzkreis 7 des Ritzels 1 verlaufenden Gebiet befindet, sowie zwei als Zahnprofil der Nowikow-Verzahnung ausgeführte und außerhalb des Wälzkreises 7 angeordnete Strecken 8 und 9.

Die Profilflanke 10 des Zahnes 4 besitzt eine Evolventenstrecke 11, die sich in einen durch den Wälzkreis 12 des Zahnrades 3 verlaufenden Gebiet befindet, sowie zwei als Zahnprofil der Nowikow-Verzahnung ausgeführte und außerhalb des Wälzkreises 12 angeordnete Strecken 13 und 14.

Die Profilflanke 5 des Zahnes 2 hat in der Strecke der Nowikow-Verzahnung am Zahnfuß eine Abweichung $\delta_{1N}$, in der Evolventenstrecke eine Abweichung $\delta_{1\epsilon}$ usw. von der Flanke 15 des theoretischen Profils des Zahnes 2 aus in Richtung der Zahndickenvergrößerung, und die Profilflanke 10 des Zahnes 4 hat in der Strecke der Nowikow-Verzahnung am Zahnkopf eine Abweichung $\delta_{3N}$, in der Evolventenstrecke eine Abweichung $\delta_{3\epsilon}$ usw. von der Flanke 16 des theoretischen Profils des Zahnes 4 aus in Richtung der Zahndickenvergrößerung.

Die Flanken 15 und 16 der theoretischen Profile der Zähne 2 und 4 sind jeweils mit punktierter Linie angegeben. Beim Eingriff absolut starrer Zahnräder gewährleisten solche theoretischen Profile ein vorgegebenes Übersetzungsverhältnis.

Die Gesamtabweichung $\delta_{\epsilon N}$ wird in der Profilstrecke 9 des Zahnes 2 und in der Profilstrecke 13 des Zahnes 4 der Summe der Abweichungen $\delta_{1N}$ und $\delta_{3N}$ gleich sein, die im Normalschnitt der Zähne relativ zur Teillinie in der Wirkungslinie der resultierenden Kräfte, welche von dem am Eingriff teilnehmenden Zähnepaar 2 und 4 aufgenommen werden, gemessen sind:

$$\delta_{\Sigma N} = \delta_{1N} + \delta_{3N}$$

Die Gesamtabweichung $\delta_{\Sigma\epsilon}$ wird in der Profilstrecke 6 des Zahnes 2 und in der Profilstrecke 11 des Zahnes 4 der Summe der Abweichungen $\delta_{1\epsilon}$ und $\delta_{3\epsilon}$ gleich sein, die im Normalschnitt der Zähne relativ zur Teillinie in der Wirkungslinie der resultierenden Kräfte, weiche von dem am Eingriff teilnehmenden Zähnepaar 2 und 4 aufgenommen werden, gemessen sind:

$$\delta_{\Sigma\epsilon} = \delta_{1\epsilon} + \delta_{3\epsilon}$$

Bei einem wirklich bestehenden Radgetriebe stellen die Zähne keine absolut steife Körper dar, sondern sie haben endliche Steifigkeit, ihre Belastbarkeit und Steifigkeit sind in den Evolventenstrecken und in den Strecken der Nowikow-Verzahnung ungleich. Von praktischer Hauptbedeutung ist daher die konstruktive Ausführung der Profile mit einer Gesamtabweichungsdifferenz $\delta$ in der Strecke der Nowikow-Verzahnung und in der Evolventenstrecke, die sich aus folgender Formel errechnet:

$$\delta = \delta_{\Sigma N} - \delta_{\Sigma\epsilon} = \frac{F_N^{0,7}}{\cos\alpha_N} \cdot \left(\frac{1}{C_{FN} m} + \frac{1}{C_{HN} m^{1/3}}\right) - \frac{F_\epsilon}{\cos\alpha_\epsilon}\left(\frac{1}{C_{F\epsilon}\cdot m} + \frac{1}{C_{H\epsilon}\cdot l_c}\right)$$

Hierin bedeuten

$m$ = Modul, $m$ = 6 mm;

$F_N$ = Normalkraft, die von dem in den Strecken 9 und 13 der Nowikow-Verzahnung am Eingriff teilnehmenden Zähnepaar 2 und 4 aufgenommen wird, $F_N = 4,3 \cdot 10^4$ N;

$F_\epsilon$ = Normalkraft, die von dem in den Evolventenstrecken 6 und 11 am Eingriff teilnehmenden Zähnepaar 2 und 4 aufgenommen wird, $F_\epsilon = 3,0 \cdot 10^4$ N;

$$C_{FN}$$

= Proportionalitätsfaktor, der bei der Ermittlung der Gesamtsteifigkeit des in den Strecken 9 und 13 unter der Wirkung der Biegekraft am Eingriff teilnehmenden Zähnepaares 2 und 4 berücksichtigt wird,

$$C_{FN} = 1,2 \cdot 10^4;$$

$C_{F\epsilon}$ = Proportionalitätsfaktor, der bei der Ermittlung der Gesamtsteifigkeit der in den Strecken 6 und 11 unter der Wirkung der Biegekraft am Eingriff teilnehmenden Zähne 2 und 4 berücksichtigt wird, $C_{F\epsilon} = 0,22 \cdot 10^6$;

$C_{HN}$ = Proportionalitätsfaktor, der bei der Ermittlung der örtlichen Steifigkeit der in den Strecken 9 und 13 unter der Wirkung der Wälzbeanspruchung am Eingriff teilnehmenden Zähne 2 und 4 berücksichtigt wird, $C_{HN} = 0,2 \cdot 10^5$;

$C_{H\epsilon}$ = Proportionalitätsfaktor, der bei der Ermittlung der örtlichen Steifigkeit der in den Strecken 6 und 11 unter der Wirkung der Wälzbeanspruchung am Eingriff teilnehmenden Zähne 2 und 4 berücksichtig wird, $C_{H\epsilon} = 0,7 \cdot 10^5$;

$\alpha_N$ = Wälzeingriffswinkel im Normalschnitt der Zähne 4 des Abtriebsrades 3, nach dem die Differenz $\delta$ gemessen ist, im Wirkungspunkt der resultierenden Kraft in der Strecke 13, $\delta_N = 24^\circ$;

$\alpha_\epsilon$ = Wälzeingriffswinkel im Normalschnitt der Zähne 4 des Abtriebsrades 3, nach dem die Differenz $\delta$ gemessen ist, im Schnittpunkt mit dem Wälzkreis, $\alpha_\epsilon = 35^\circ$;

$l_c$ = Länge der Berührungslinie der Zähne 2 und 4 in den Strecken 6 und 11, $l_c$ = 18 mm.

Die Abweichungsdifferenz $\delta$ beträgt 0,04 mm.

9

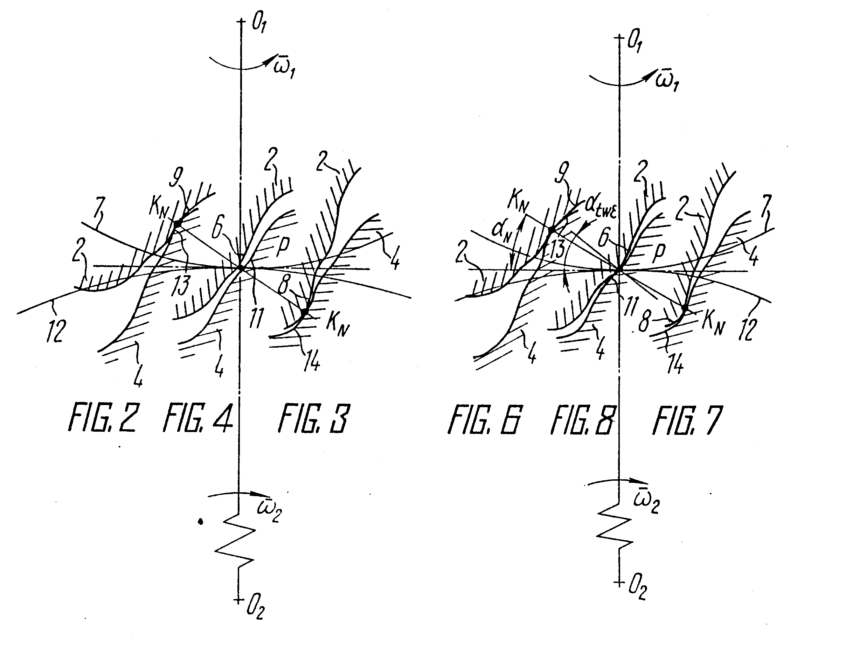

Da der wert $\delta > 0$ ist, erfolgt die Berührung der Zähne 2 und 4 in dem erfindungsgemäß ausgeführten Radgetriebe beim kinematischen Eingriff nur in den Strecken 9 und 13 (Fig.2 ) im Punkt $k_N$ des Zahnfußes 2 vom Ritzel und des Zahnkopfes 4 vom Zahnrad sowie in den Strecken 8 und 14 (Fig.3) im Punkt $k_N$ des Zahnkopfes 2 vom Ritzel und des Zahnfußes 4 vom Zahnrad, die nach dem Typ des Zahnprofils der Nowikow-Verzahnung ausgeführt wurden. Die Evolventenstrecken 6 und 11 (Fig.4) der Zähne 2 und 4 haben hingegen keine Berührung.

Aufgrund der Analyse von Figuren 2, 3 und 4 ist ersichtlich, daß sich das vorliegende Radgetriebe mit Mischverzahnung im unbelasteten Zustand als kinematisch ungekoppelt erweist.

Zur Veranschaulichung ist in Fig.5 ein Segment des Zahnrades 3 mit den Zähnen 4 dargestellt, an dem am Zahnkopf und -faß Berührungsstellen zu erkennen sind, die als Ergebnis des Eingriffs dieser Zähne mit den Zähnen 2 des Ritzels 1 entstanden waren.

Ist der Wert $\delta < 0$, so wird die Berührung der Zähne 2 und 4 (Fig.1) in dem erfindungsgemäß ausgeführten Radgetriebe beim kinematischen Eingriff nur in den Evolventenstrecken 6 und 11 hergestellt, und die Strecken 9 und 13, bzw. 8 und 14 der Zähne 2 und 4 der Nowikow-Verzahnung werden einander nicht berühren. In diesen Fall wird das Radgetriebe mit Mischverzahnung im unbelasteten Zustand ebenfalls kinematisch ungekoppelt sein.

Im kinematischen Eingriff des Radgetriebes bleibt die Winkelverstellung des Ritzels 1 hinter der des Ritzels mit dem theoretischen Profil in der Strecke 9 der Nowikow-Verzahnung um den Winkel $\Delta\rho_{1N}$ (in Fig nicht dargestellt) zurück, welcher Winkel sich aus folgender Formel ermitteln läßt:

$$\Delta\varphi_{1N} = \frac{\delta_{1N}}{\imath_{1N}} \cdot \sec \beta$$

worin

$_{1N}$ = Radius des Ritzels im Angriffspunkt der resultierenden Kraft in der Strecke 9 (Fig.1);

$\beta$ = Teil-Zahnschrägewinkel bedeuten;

sowie in der Evolventenstrecke 6 um den Winkel $\Delta\rho_{1\epsilon}$ (nicht dargestellt), der sich aus folgender Formel errechnet:

$$\Delta\varphi_{1\epsilon} = \frac{\delta_{1\epsilon}}{\imath_{1\epsilon}} \cdot \sec \beta,$$

worin

$_{1\epsilon}$ = Wälzkreishalbmesser des Ritzels bedeutet.

Die Winkelverstellung des Abtriebsrades 3 eilt hingegen der des Abtriebsrades mit dem theoretischen Profil in der Strecke 13 der Nowikow-Verzahnung um den Winkel $\Delta\rho_{3N}$ voraus, der sich aus folgender Formel errechnet:

$$\Delta\varphi_{3N} = \frac{\delta_{3N}}{\imath_{3N}} \cdot \sec \beta,$$

worin

$_{3N}$ = Radius des Zahnrades im Angriffspunkt der resultierenden Kraft in der Strecke 13 bedeutet; sowie in der Evolventenstrecke 11 um den Winkel $\Delta\rho_{3\epsilon}$ , der sich aus folgender Formel errechnet:

$$\Delta\varphi_{3\epsilon} = \frac{\delta_{3\epsilon}}{\imath_{3\epsilon}} \cdot \sec \beta,$$

$$\Delta P_{3N} = \frac{\delta_{3N}}{\ell_{3N}} \cdot \sec \pounds,$$

worin

$_{3\epsilon}$ = Wälzkreisradius des Abtriebsrades bedeutet.

Bei der Arbeit des Radgetriebes im dynamischen Eingriff werden die Zähne 2 und 4 verformt, das Ritzel 1 dreht sich um den Winkel $\Delta_{\rho 1N}$ ($\Delta_{\rho 1\epsilon}$) in seiner Drehrichtung, während das Zahnrad 3 sich um den Winkel $\Delta_{\rho 3N}$ ($\Delta_{\rho 3\epsilon}$) in seiner Gegendrehrichtung dreht.

Im Ergebnis der Drehung fällt die Profilflanke 5 des am Eingriff teilnehmenden Zahnes 2 mit der Flanke 15 des theoretischen Zahnprofils vom Ritzel 1 zusammen, wahrend die Profilflanke 10 des am Eingriff teilnehmenden Zahnes 4 mit der Flanke 16 des theoretischen Zahnprofils vom Zahnrad 3 zusammenfällt.

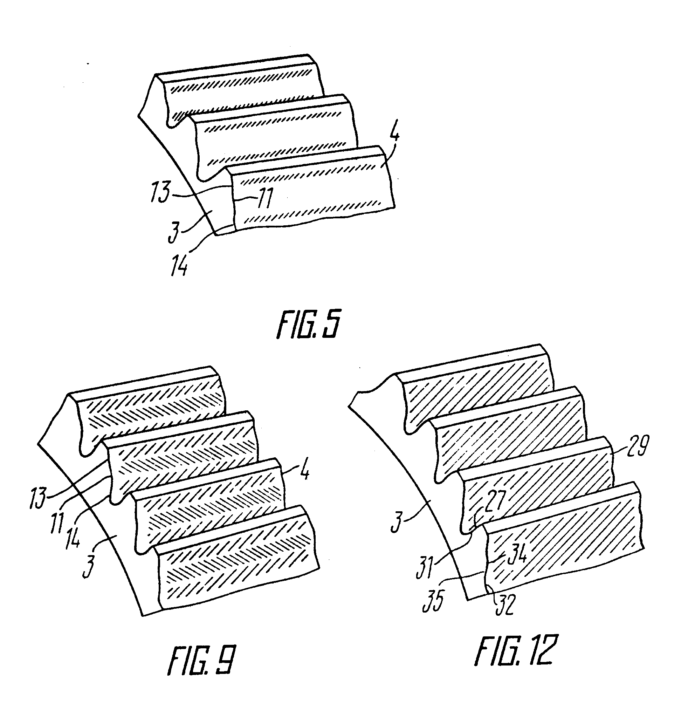

Bei der Ausführung der Profilstrecken 6, 8 und 9 der Flanke 5 des Zahnes 2 und der Strecken 11, 13 und 14 der Flanke 10 des Zahnes 4 mit einer Abweichung $\delta$ = 0,04 mm in Richtung der Zahndickenvergrößerung greifen die Zähne 2 und 4 in den Strecken 9 und 13 (Fig.6) der Nowikow-Verzahnung im Bereich des theoretischen Berührungspunktes $k_N$ am Zahnfuß 2 vom Ritzel und am Zahnkopf 4 vom Zahnrad unter dem Pressungswinkel $\alpha_N$ in den Strecken 8 und 14 (Fig.7) der Nowikow-Verzahnung - im Bereich des theoretischen Berührungspunktes $k_N$ am Zahnkopf 2 vom Ritzel und am Zahnfuß 4 vom Zahnrad in den Evolventenstrecken 6 und 11 (Fig.8) im Wälzpunkt P mit dem Eingriffslinienwinkel $\alpha_{tw\epsilon}$-ineinander.

Da die theoretischen Profile beim Eingriff absolut steifer Zahnräder kein vorgegebenes Übersetzungsverhältnis liefern, wird das Radgetriebe mit Mischverzahnung im Belastungszustand gekoppelt, und aufgrund der angenommenen Abweichungsdifferenz $\delta$ entspricht die Belastbarkeit der Evolventenstrecken 6 und 11 der Zähne 2, 4(Fig.1) ihrer Tragfähigkeit. Im Dauerbetrieb des vorliegenden Radgetriebes unter Bedingungen einer gleichbleibenden Belastung, wenn die Arbeitsfähigkeit der Verzahnung auf die Ermüdungsfestigkeit der Zähne 2, 4 durch die Wirkung der Walzenbeanspruchungen beschränkt ist, nehmen die Evolventenstrecken 6, 11 eine Belastung $F_\epsilon$ auf, die ihrer Tragfähigkeit nach dem betreffenden Kriterium entspricht. Die hohe Belastbarkeit des Radgetriebes wird aufgrund der Steigerung der Belastung $F_N$ in den Strecken 9 und 13 bzw. 8 und 14 der Nowikow-Verzahnung und der wirkungsvollsten Ausnutzung der Evolventenstrecken 6, 11 des Profils, die sich im Schnittgebiet des Zahnprofils mit dem Wälzkreis des jeweiligen Zahnrades befinden.

Zur Veranschaulichung zeigt Fig.9 ein Segment des Zahnrades 3 mit den Zähnen 4, an dem Berührungsstellen zu erkennen sind, die sich im Ergebnis ihres dynamischen Eingriffs mit den Zähnen 2 des Ritzels 1 gestaltet haben. Durch die vollständige Ausnutzung der Zahnflächen mit gemäß verschiedenen Verzahnungsgesetzen ausgeführten und das rationellste Profil in jedem Eingriffsgebiet aufweisenden Strecken werden die Eingriffsdauer verlängert, die Ermüdungsfestigkeit der Zähne durch die Wirkung der Biegespannungen und Wälzbeanspruchung sowie die Lebensdauer erhöht. Eine solche konstruktive Ausführung des Radgetriebes gewährleistet folgende Vorteile: etwa gleichmäßige Lastverteilung unter den am Eingriff teilnehmenden Zähnen 2 und 4 über die Zahnkranzbreite und -länge, geringen Lageausschlag des Angriffspunktes der resultierenden Kraft über die Zahnkranzbreite sowie Verbesserung der vibroakustischen Kenndaten des Radgetriebes. Die verlängerte Eingriffsdauer und relativ gleichmäßige Lastverteilung am Zahnkranz gestatten, das Radgetriebe mit Mischverzahnung mit einer gegenüber der Achseingriffsteilung geringeren Zahnkranzbreite $b_w$ auszuführen, z.B. $b_w \approx 0,7 \cdot P_x$ und dadurch die Außenabmessungen und den Metallaufwand dieses Radgetriebes zu reduzieren. Im Falle vorgegebener Außenabmessungen des Radgetriebes lassen sich die Durchmesserteilung der Zähne vergrößern und auf diese Weise ihre Walzenbeanspruhungen und Biegespannungen herabsetzen oder die Größe der Axialkomponente der Eingriffskräfte und die Lagerbelastung vermindern.

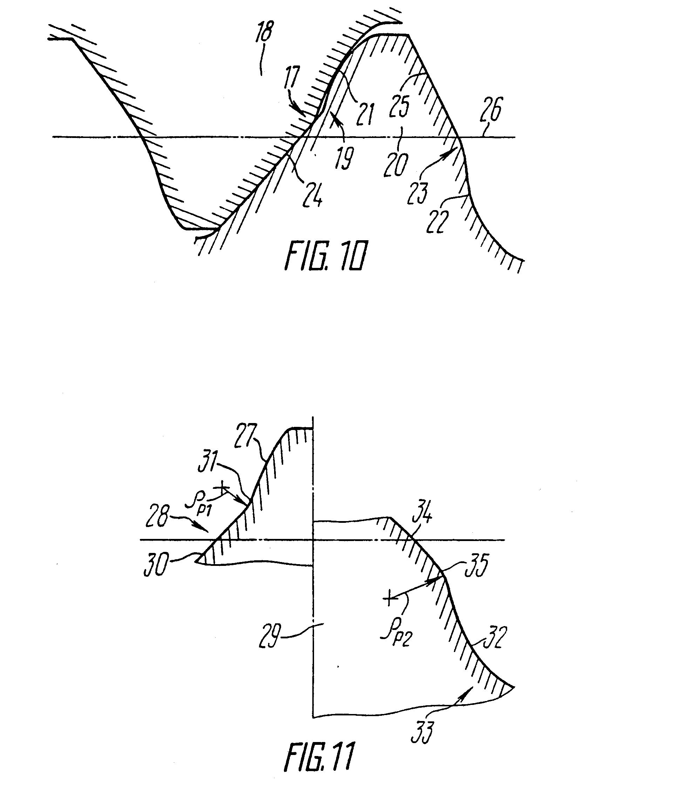

Um das Axialmaß des Radgetriebes oder die Größe der Axialkomponente der Eingriffskräfte noch weiter zu verringern, ist es zweckmäßig, wenn die Profilflanke 17 (Fig.10) eines Zahnes 18 und die Profilflanke 19 eines Zahnes 20, die am Eingriff teilnehmen, je zwei Strecken aufweisen. Die Strecke 21 der ersten Profilflanke 19 des Zahnes 20 ist als Zahnprofil der Nowikow-Verzahnung ausgebildet und am Zahnkopf angeordnet. Die andere Strecke 22 der zweiten Profilflanke 23 des Zahnes 20 ist ebenfalls als Zahnprofil der Nowikow-Verzahnung ausgebildet und auf der entgegengesetzten Seite relativ zur Achse des Zahnprofils 20 am Zahnfuß angeordnet. Strecken 24 und 25 sind nach einer Evolvente ausgeführt.

Die Abweichung $\delta_{\Sigma N}$ der Profilflanken 17 und 19 der ineinandergreifenden Zähne 18, 20 ist in der Strecke 21 der Nowikow-Verzahnung im wesentlichen der Abweichung $\delta_{\Sigma\epsilon}$ der Profilflanken 17 und 19 der ineinandergreifenden Zähne 18, 20 in der Evolventenstrecke 24 gleich.

Die Gesamtabweichungsdifferenz δ ist in der Strecke der Nowikow-Verzahnung und in der Evolventenstrecke gleich Null, was Fig.10 veranschaulicht, in der ein Stirnschnitt durch ein Zahnstangenpaar dargestellt ist, dessen Wälzlinien 26 zusammenfallen.

Durch eine solche konstruktive Ausführung des Zahnprofils wird die Profilüberdeckung der Evolventenstrecken erhöht. Dies wird durch die Vergrößerung der Evolventenstrecke des Zahnprofils in Richtung des Zahnkopfes bzw. -fußes erreicht. Dadurch läßt sich das Radgetriebe mit Mischverzahnung mit einer Zahnkranzbreite $b_w$ ausführen,die kleiner als die 0,7fache Achseingriffsteilung der Zähne ist:

$$b_w < 0,7 \cdot P_x$$

Dabei sind die Zahnprofile des Zahnrades und des Ritzels asymmetrisch ausgebildet und während der Bearbeitung auf Abwälzmaschinen mit ein und demselben Werkzeug geschnitten.

Um die Belastbarkeit des Radgetriebes noch mehr zu steigern, muß die Zahnprofilflanke jedes der Zahnräder wie folgt ausgeführt werden. Um das Verständnis des Radgetriebes zu ermöglichen, wird es sich im folgenden nur um ein Abtriebsrad handeln. Die Strecke 27 (Fig.11) einer Profilflanke 28, die als Zahnprofil der Nowikow-Verzahnung ausgeführt und an einem Zahnkopf 29 angeordnet ist, verbindet sich mit Hilfe einer ersten konkaven krummlinigen Strecke 31 mit einer Evolventenstrecke 30. Die Krümmung der Strecke 31 hat ein Vorzeichen, das der Krümmung der Strecke 27 der Nowikow-Verzahnung entgegengesetzt ist. Die Strecke 32 einer Profilflanke 33, die als Zahnprofil der Nowikow-Verzahnung ausgeführt und am Zahnfuß 29 angeordnet ist, verbindet sich mit Hilfe einer zweiten konvexen krummlinigen Strecke 35 mit einer Evolventenstrecke 34. Die Krümmung der Strecke 35 hat ein Vorzeichen, das der Krümmung der Strecke 32 der Nowikow-Verzahnung entgegengesetzt ist. Der Krümmungsradius der ersten krummlinigen Strecke 31 ist

$$\rho_{p_1}'$$

und der Krümmungsradius der zweiten krummlinigen Strecke 35 ist

$$\rho_{p_2}.$$

Der Krümmungsradius

$$\rho_{p_2}$$

ist größer als der Radius

$$\rho_{p_1}.$$

Der Wert von

$$\rho_{p_2}$$

wird aus folgenden Verhältnis ausgewählt:

$$0,2 \cdot m \leqslant \rho_{p_2} \leqslant m.$$

Hierin bedeutet

m = Modul

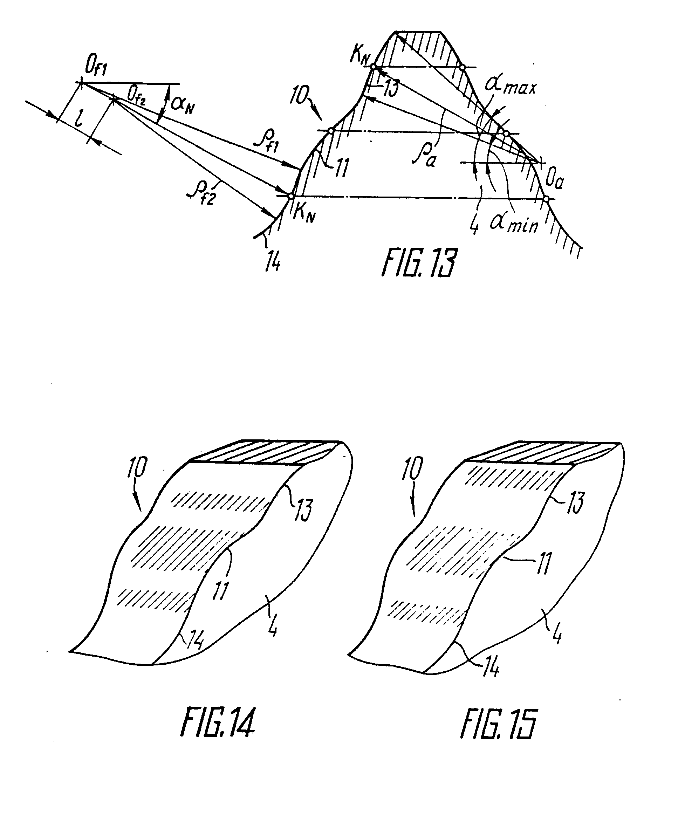

Solche konstruktive Ausführung der Zahnform führt zu einer noch beachtlicheren Vergrößerung der am Eingriff teilnehmenden Zahnfläche, was durch Einfügen der ersten und zweiten krummlinigen Strecken 31 und 35 in die Verzahnung erreicht wird. Die am Eingriff teilnehmende Zahnfläche ist in Fig.12 veranschaulicht. Begrenzungen bei der Auswahl des Krümmungsradius

$$\rho_{p_2}$$

(Fig.11) der zweiten krummlinigen Strecke 35 sind erforderlich um die Entstehung einer geometrischen Interferenz in den Evolventenstrecken 30 und 34 sowie in den Strecken 27 und 32 der Nowikow-Verzahnung zu vermeiden. Bei der Ausführung der zweiten krummlinigen Strecke 35 mit dem Radius

$$\rho_{p_2} \leqslant 0,2 \cdot m$$

entsteht die geometrische Interferenz der Evolventenstrecken 30 und 34 sowie der Strecken 27 und 32 der Nowikow-Verzahnung, welche die Belastbarkeit des Radgetriebes begrenzt. Bei der Bemessung von

$$\rho_{p_2} > m$$

werden die am Eingriff teilnehmende Zahnfläche und die Belastbarkeit des Radgetriebes reduziert.

Um eine niedrige Empfindlichkeit der Strecken der Nowikow-Verzahnung gegen Abweichungen $\Delta a'_w > 0$ und $\Delta a''_w < 0$ des Achsabstands $a_w$ vom Radgetriebe, die z.B. durch Wärmeverzüge des Gehäuses und der Bestandteile des Untersetzungsgetriebes während des Betriebes verursacht wurden, zu gewährleisten, ist es ratsam, bei dem erfindungs gemäß ausgeführten Radgetriebe mit Mischverzahnung die Strecke 14 (Fig.13) der Profilflanke 10 am Zahnfuß 4, die nach dem Typ der Nowikow-Verzahnung ausgeführt ist, mit Bögen von zwei sanft miteinander konjugierten Kreisen mit Radien

$$\rho_{f_1}$$

und

$$\rho_{f_2}$$

und die Strecke 13 derselben Profilflanke am Zahnkopf, die nach dem Typ der Nowikow-Verzahnung ausgeführt ist, mit einem Bogen mit einem Krümmungsmittelpunkt $0_a$ und einem Radius $\rho_a$ zu umschreiben.

Die Krümmungsmittelpunkte

$$0_{f_1}$$

und

$$0_{f_2}$$

der Kreise sind in einem Abstand 1 voneinander entfernt, der sich aus folgender Formel errechnet:

$$1 = (0,3...1,2)(\rho_{f_2} - \rho_a) \cdot \left( \frac{\Delta a'_w}{|\Delta a''_w|} \cdot \frac{\sin\alpha_{max} - \sin\alpha_N}{\sin\alpha_N - \sin\alpha_{min}} - 1 \right)$$

Hierin bedeuten

l = Krümmungsmittelpunktabstand der konjugierten Kreisbögen der Profilstrecke am Zahnfuß, der längs der Gesamtnormalen von dem Krümmungsmittelpunkt des Bogens der Profilstrecke am Zahnfuß aus abgemessen wird, der sich näher am Zahngrund befindet: mit l > 0 wird er in der Richtung von dem Zahnprofil aus und mit l < 0 in der Richtung nach dem Zahnprofil abgemessen;

$$\rho_{f_2}$$

= Krümmungsradius des Bogens der Strecke der Profilflanke an dem näher am Zahngrund befindlichen Zahnfuß;

$\rho_a$ = Krümmungsradius der Strecke der Profilflanke am Zahnkopf;

$\Delta a'_w$, $\Delta a''_w$ = Werte des Achsabstandfehlers des Radgetriebes in Richtung der Abstandsvergrößerung ($\Delta a'_w$) bzw. -verkleinerung ($\Delta a''_w$), die mit Herstellungs- und Einbaufehlern des Radgetriebes, dessen Betriebsbedingungen gleichwertig sind;

$\alpha_N$ = Wälzeingriffswinkel der als Zahnprofil der Nowikow-Verzahnung ausgebildeten Strecke der Flanke im Berührungspunkt;

$\alpha_{max}$ = Maximalwert des Wälzeingriffswinkels der als Zahnprofil der Nowikow-Verzahnung ausgebildeten Flankenstrecke am Zahnkopf;

$\alpha_{min}$ = Minimalwert des Wälzeingriffswinkels der als Zahnprofil der Nowikow-Verzahnung ausgebildeten Flankenstrecke am Zahnfuß.

Wenn man die Strecke 13 (Fig.13) der Profilflanke 10 am Zahnkopf 4 mit Bögen von zwei sanft miteinander konjugierten Kreisen mit Radien

$$\rho_{a_1}$$

und

$$\rho_{a_2}$$

(in Fig. 13 nicht dargestellt) umschreibt, so muß die Profilstrecke 14 derselben Flanke am Zahnfuß nur mit einem Bogen umschrieben werden.

Die geringe Empfindlichkeit der Strecken 13 und 14 (Fig.14) der Nowikow-Verzahnung gegen den Achsabstandfehler $\Delta a'_w > 0$ wird an der Lage der Berührungsstellen veranschaulicht, die in Richtung der Evolventenstrecke 11 versetzt sind, aber innerhalb der Strecken 13 und 14 liegen. Beim Achsabstandfehler $\Delta a''_w < 0$ wird die geringe Empfindlichkeit der Strecken 13 und 14 (Fig.15) der Nowikow-Verzahnung durch die Lage der Berührungsstellen veranschaulicht, die zwar von der Evolventenstrecke 11 maximal entfernt sind doch innerhalb der Strecken 13, 14 liegen.

Während der Arbeit dieses Radgetriebes nehmen die Berührungsstellen verschiedene Lagen innerhalb der Strecken 13 und 14 ein. Unabhängig von den absoluten Beträgen jeder der Größen $\Delta a'_w$ und $\Delta a''_w$ wird also die ganze Oberfläche der Strecken der Nowikow-Verzahnung ausgenutzt.

Die vorstehend beschriebenen Zahnprofile der Zahnräder, die das Radgetriebe mit Mischverzahnung bilden, können z.B. mittels eines Zahnbearbeitungswerkzeugs vom Typ der Zahnstange hergestellt werden.

Bei der Änderung der Größe $\delta$ kann ein und dasselbe Zahnbearbeitungswerkzeug verwendet werden, wenn man den Profilverschiebungssummenfaktor $X_\Sigma$ der Zahnrad- und Ritzelzähne aus folgender Formel ermittelt:

$$X_\Sigma = \frac{Z_1 + Z_2}{2\,tg\,\alpha_\varepsilon} \cdot (inv\,\alpha_{tw\varepsilon} - \frac{\Delta\delta}{a_w \cdot cos\,\beta} - inv\,\alpha_{t\varepsilon})$$

Hierin bedeuten

$a_w$ = Achsabstandsnennmaß des Radgetriebes;

$Z_1$, $Z_2$ = Zähnezahl des Ritzels und des Zahnrades;

$\alpha_\varepsilon$ = Profilwinkel des Zahnstangenzahns im Normalschnitt in der Evolventenstrecke;

$\alpha_{t\varepsilon}$ = Profilwinkel des Zahnstangenzahns im Stirnschnitt in der Evolventenstrecke;

$\alpha_{tw\varepsilon}$ = Eingriffslinienwinkel der Zähne in der nach einer Evolvente ausgeführten Strecken des Profils;

m = Modul;

$\Delta\delta$ = vorgegebene Verkleinerung der Größe der Abweichungsdifferenz der Profilflanke des am Fingriff teilnehmenden Zahnes von dem theoretischen Profil.

Die Ermittlung des Achsabstandsnennmaßes $a_w$ des Radgetriebes aus der Abhängigkeit

$$a_w = m \cdot (\frac{Z_1 + Z_2}{2\,cos\,\beta} + X_\Sigma)$$

worin

m = Modul im Normalschnitt;

$Z_1$, $Z_2$ = Zähnezahlen des Ritzels und des Zahnrades;

$\beta$ = Zahnschrägewinkel am Teilkreis;

$X_\Sigma$ = Profilverschiebungssummenfaktor der Zähne des Ritzels und des Zahnrades bedeuten, führt zur Erhaltung der Normalbedingungen der Verzahnung, weil die Evolventenstrecken gegen die Achsabstandsänderung unempfindlich, sind, und in den Strecken der Nowikow-Verzahnung wird die Zahnberührung gestört, wenn die vorliegende Abhängigkeit nicht eingehalten wird.

Bei dem Radgetriebe mit Mischverzahnung errechnet sich Eingriffslinienwinkel $\alpha_{tw\varepsilon}$ der Evolventenstrecken der Zahnflanken als:

$$\alpha_{tw\varepsilon} = arc\,cos(\frac{m \cdot cos\,\alpha_{t\varepsilon}}{2\,a_w} \cdot \frac{Z_1 + Z_2}{cos\,\beta}) \cdot$$

Durch die angenommenen Abhängigkeiten für die Ermittlung des Profilverschiebungssummenfaktors $X_\Sigma$ und des Achsabstandsnennmaßes $a_w$ vom Radgetriebe mit Mischverzahnung wird es möglich, die Profilverschiebungsfaktoren der Zähne als Konstruktionsdaten für die Senkung der Spannungen in den Zähnen und die Steigerung der Belastbarkeit der Verzahnung auszunutzen.

Gewerbliche Anwendbarkeit

Radgetriebe mit Mischverzahnung können als Stirnrad-, Kegelrad- und Hypoidgetriebe ausgeführt und im Flugzeug-, Schiff-, Transportmaschinen-, allgemeinen Getriebebau und anderen Zweigen des Maschinenbaus verwendet werden. Sie sind wirkungsvoller als Evolventen- und Nowikow-Getriebe. Bei Antrieben und Untersetzungsgetrieben, bei denen die Mischverzahnung zur Anwendung kommt, wird die 1,25 bis 2,0fache Steigerung der Belastbarkeit im Vergleich zu den Evolventenverzahnungen und deren 1,3 bis 1,6fache Steigerung im Vergleich zur Nowikow-Verzahnung gewährleistet. Die Ausnutzung der Mischverzahnung gestattet, die Ressource der Radgetriebe 2 bis 10fach zu vergrössern oder je nach den geometrischen Daten und Beanspruchungsbedingungen deren Aussenabmessungen und Metallaufwand um 5 bis 30% herabzusetzen.

Bei der Herstellung der Radgetriebe mit Mischverzahnung und des erforderlichen Zahnbearbeitungswerkzeugs wird die Ausrüstung ausgenutzt, die für die Evolventenverzahnung Verwendung findet. Die Radpaarungen eines Schrägzahn- Stirnradgetriebes oder eines Pfeilradgetriebes mit Mischverzahnung werden mit ein und demselben Werkzeug geschnitten.

**Patentansprüche**

1. Radgetriebe mit Mischverzahnung, das durch Zahnräder (1, 3) gebildet ist, bei denen jede Profilflanke (5, 10) eines Zahnes (2, 4) eine ungefähr nach einer Evolvente ausgeführte Strecke (6, 11) aufweist, die sich in einem ersten, den Wälzkreis (7, 12) des Zahnrades (1, 3) beinhaltenden Gebiet befindet und wenigstens mit einer als Zahnprofil der Nowikow-Verzahnung ausgeführten und in einem zweiten, außerhalb des ersten Gebietes liegenden Gebiet befindlichen Strecke verbunden ist,
**dadurch gekennzeichnet,** daß die am Eingriff teilnehmende Profilflanke (5, 10) des Zahnes (2, 4) zumindest in zwei Strecken (6, 8 11, 14) eine Abweichung von der Flanke (15, 16) des theoretischen Zahnprofils in der Richtung der Dickenvergrößerung des am Eingriff teilnehmenden Zahnes (2, 4) hat.

2. Radgetriebe mit Mischverzahnung nach Anspruch 1,
**dadurch gekennzeichnet,** daß die Differenz der Gesamtabweichungen ($\delta$) in den Strecken (9, 13, 6, 11) der Profilflanken (5, 10) der ineinandergreifenden Zähne von den Flanken ihrer theoretischen Profile (2, 4) in Übereinstimmung mit folgender Abhängigkeit ermittelt wird:

$$\delta = \frac{F_j^{0,7}}{\cos \alpha_j} * \left(\frac{1}{C_{Fj} * m} + \frac{1}{C_{Hj} * m^{1/3}}\right) - \frac{F_\epsilon}{\cos \alpha_\epsilon} *$$

$$* \left(\frac{1}{C_{F\epsilon} * m} + \frac{1}{C_{H\epsilon} * l_\epsilon}\right)$$

Hierin bedeuten

$\delta$ = Gesamtabweichungsdifferenz der Profilflanken in der j-ten Eingriffsstrecke der ineinandergreifenden Zähne und in ihren Evolventenstrecken ($\epsilon$), gemessen im Normalschnitt der Zähne relativ zur Teillinie über ein mit einem der Zahnräder fluchtenden Fläche, mm;

$F_j$ = Normalkraft, die von einem in der j-ten Eingriffsstrecke am Eingriff teilnehmenden Zahnpaar aufgenommen wird; ermittelt als Funktion der Geometrie der Zahnräder ihres Werkstoffs, der Technologie der Verfestigungs- und Schlichtbearbeitung, des Zyklogramms der äußeren Beanspruchung, N;

m = Modul, mm;

$F_\epsilon$ = Normalkraft, die von einem in der Evolventeneingriffsstrecke am Eingriff teilnehmenden Zahnpaar aufgenommen wird; ermittelt als Funktion der Geometrie der Zahnräder, ihres Werkstoffs, der Technologie der Verfestigungs- und Schlichtbearbeitung, des Zyklogramms der äußeren Beanspruchung, N;

$\alpha_j$ = Profilwinkel im Normalschnitt der Radzähne, nach dem die Differenz $\delta$ gemessen ist, im Angriffspunkt der resultierenden Kraft in der j-ten Strecke;

$\alpha_\epsilon$ = Profilwinkel im Normalschnitt der Radzähne, nach dem die Differenz $\delta$ gemessen ist, im Schnittpunkt mit dem Wälzkreis;

$$C_{F_j} \ , \ C_{F_\epsilon}$$

= Proportionalitätsfaktor, der bei der Ermittlung der gesamten Steifigkeit(Biege- und Schubsteifigkeit) eines in der j-ten Strecke und in der Evolventeneingriffsstrecke($\epsilon$)am Eingriff teilnehmenden Zahnpaares berücksichtigt wird; für Stahlzahnräder ändert er sich innerhalb

$C_{Fj}$ = (0,7)...2.0)$\cdot 10^4$ ,

$$C_{F_\varepsilon} = (0,15...0,25) \cdot 10^6;$$

$C_{Hj}$,

$$C_{H_\varepsilon}$$

= Proportionalitätsfaktor, der bei der Ermittlung der örtlichen (Berührungs-) Steifigkeit des in der j-ten Strecke und in der Evolventeneingriffsstrecke ($\epsilon$) am Eingriff teilnehmenden Zahnpaares berücksichtigt wird; für Stahlzahnräder ändert er sich innerhalb

$$C_{Hj} = (0,15...0,3) \cdot 10^5,$$

$$C_{H_\varepsilon} = (0,5...0,8) \cdot 10^5;$$

$l_c$ = Länge der Berührungslinie in den Evolventenstrecken, mm.

3. Radgetriebe mit Mischverzahnung nach Ansprüche 1, 2, **dadurch gekennzeichnet,** daß sich eine als Zahnprofil der Nowikov-Verzahnung ausgebildete Strecke (21) einer ersten Profilflanke (19) am Kopf eines Zahnes (20) und eine als Zahnprofil der Nowikow-Verzahnung ausgeführte, auf der relativ zur Achse des Profils des Zahnes (20) entgegengesetzten Seite angeordnete Strecke (22) einer zweiten Profilflanke (23) am Fuss des Zahnes (20) befindet, wobei die Abweichung ($\delta_{\Sigma\epsilon}$) der Profilflanke (19) des in einer annähernd nach einer Evolvente ausgebildeten Strecke (24) am Eingriff teilnehmenden Zahnes (20) im wesentlichen der Abweichung ($\delta_{\Sigma N}$) der Profilflanke (19) des in der als Zahnprofil der Nowikow-Verzahnung ausgebildeten Strecke (21) am Eingriff teilnehmenden Zahnes (20) gleich ist.

4. Radgetriebe mit Mischverzahnung nach Anspruch 3, **dadurch gekennzeichnet,** daß eine als Zahnprofil der Nowikow-Verzahnung ausgebildete und am Kopf eines Zahnes (29) befindliche Strecke (27) einer Profilflanke (28) mit einer annähernd nach einer Evolvente ausgebildeten Strecke (30) der Profilflanke (28) über eine erste krummlinige Strecke (31) verbunden ist, deren Krümmung des entgegengesetzte Vorzeichen bezüglich der Krümmung des Zahnprofils der Nowikow-Verzahnung hat, während eine zweite, als Zahnprofil der Nowikow-Verzahnung ausgebildete und am Fuß des Zahnes (29) befindliche Strecke (32) einer Profilflanke (33) mit einer annähernd nach einer Evolvente ausgeführten Strecke (34) der Profilflanke (33) über eine zweite krummlinige Strecke (35) verbunden ist, deren Krümmung das entgegengesetzte Vorzeichen bezüglich der Krümmung des Zahnprofils der Nowikow-Verzahnung besitzt, wobei der Krümmungsradius der zweiten krümmlinigen Strecke (35) größer als der der ersten Strecke (31) aus dem Verhältnis

$$0,2 \cdot m \leqq \rho_{p_2} \leqq m$$

bemessen ist. Hierin bedeuten
m = Modul;

$$\rho_{p_2}$$

= Krümmungsradius der zweiten krummlinigen Strecke, die die annähernd nach einer Evolvente ausgebildete Strecke mit der nach der Nowikow-Verzahnung ausgebildeten Strecke am Zahnfuß verbindet.

**5.** Radgetriebe mit Mischverzahnung nach Anspruch 4,
**dadurch gekennzeichnet,** daß die nach dem Typ der Nowikow-Verzahnung ausgebildete Strecke (14) der Profilflanke (10) am Zahnfuß (4) mit Bögen von zwei Kreisen umschrieben ist, die miteinander sanft konjugiert sind und Krümmungsmittelpunkte

$$0_{f_1}, \; 0_{f_2}$$

haben, welche in einer Entfernung voneinander liegen, die sich aus folgender Formel errechnet:

$$1 = (0{,}3\ldots1{,}2)(\rho_{f_2} - \rho_a)\left(\frac{\Delta a'_w}{|\Delta a''_w|} \cdot \frac{\sin\alpha_{max} - \sin\alpha_N}{\sin\alpha_N - \sin\alpha_{min}} - 1\right),$$

Hierin bedeuten

l = Krümmungsmittelpunktabstand der konjugierten Kriesbogen der Profilstrecke am Zahnfuß, der längs der Gesamtnormalen von dem Krümmungsmittelpunkt des Bogens der Profilstrecke am Zahnfuß aus abgemessen wird, der sich näher am Zahngrund befindet: mit l > 0 wird er in der Richtung von dem Zahnprofil aus und mit l < 0 in der Richtung nach dem Zahnprofil abgemessen;

$$\rho_{f_2}$$

= Krümmungsradius des Bogens der Strecke des Profils an dem nähre am Zahngrund befindlichen Zahnfuß;

$\rho_a$ = Krümmungsradius der Strecke des Profils am Zahnkopf;

$\Delta a'_w$ = Wert des Achsabstandfehlers des Radgetriebes in Richtung der Abstandsvergrößerung;

$\Delta a''_w$ = Wert des Achsabstandfehlers des Radgetriebes in Richtung der Abstandsverkleinerung;

$\alpha_N$ = Wälzeingriffswinkel der als Zahnprofil der Nowikow-Verzahnung ausgebildeten Strecke im Berührungspunkt;

$\alpha_{max}$ = Maximalwert des Wälzeingriffswinkels der als Zahnprofil der Nowikow-Verzahnung ausgebildeten Strecke am Zahnkopf;

$\alpha_{min}$ = Minimalwert des Wälzeingriffswinkels der als Zahnprofil der Nowikow-Verzahnung ausgebildeten Strecke am Zahnfuß.

## Claims

**1.** Gear drive with mixed gearing which is formed by gears (1, 3), in which each profile flank (5, 10) of a tooth (2, 4) has a portion (6, 11) which is shaped approximately along an involute and which is located in a first area extending through the pitch circle (7, 12) of the gear (1, 3) and is connected to at least one portion which is shaped as a tooth profile of circarc gearing and which is located in a second area lying outside the first area, characterized in that that profile flank (5, 10) of the tooth (2, 4) which participates in meshing has, at least in two portions (6, 8, 11, 14), a deviation from the flank (15, 16) of the theoretical tooth profile, in the direction of the increase in the thickness of the tooth (2, 4) participating in meshing.

**2.** Gear drive with mixed gearing according to Claim 1, characterized in that the difference of the total deviations ($\delta$) in the portions (9, 13, 6, 11) of the profile flanks (5, 10) of the meshing teeth, from the flanks of their theoretical profiles (2, 4), is determined in correspondence with the following dependency:

$$\delta = \frac{F_j^{0,7}}{\cos \alpha_j} * \left(\frac{1}{C_{rj} * m} + \frac{1}{C_{Hj} * m^{1/3}}\right) - \frac{F_\epsilon}{\cos \alpha_\epsilon} * \left(\frac{1}{C_{r\epsilon} * m} + \frac{1}{C_{H\epsilon} * l_\epsilon}\right)$$

Herein the meanings are as follows:

$\delta$ = total deviation difference of the profile flanks in the j-th meshing portion of the meshing teeth and in their involute portions ($\epsilon$), measured in the normal section of the teeth relative to the pitch line, over a surface which is in alignment with one of the gears, mm;

$F_j$ = normal force absorbed by a pair of gears participating in meshing in the j-th meshing portion; determined as a function of the geometry of the gears, of the material of which they are made, of the technology of the hardening and finishing machining, of the cyclogram of the external stressing, N;

m = module, mm;

$F_\epsilon$ = normal force absorbed by a pair of gears participating in meshing in the involute meshing portion; determined as a function of the geometry of the gears, of the material of which they are made, of the technology of the hardening and finishing machining, of the cyclogram of the external stressing, N;

$\alpha_j$ = profile angle in the normal section of the gear toothing, according to which the difference $\delta$ is measured, at the point of application of the resulting force in the j-th portion;

$\alpha_\epsilon$ = profile angle in the normal section of the gear toothing, according to which the difference $\delta$ is measured, at the point of intersection with the pitch circle;

$$c_{F_j}, \quad c_{F_\epsilon}$$

= proportionality factor which is taken into account when determining the total rigidity (bending and thrust resistance) of a pair of gears participating in meshing in the j-th portion and in the involute meshing portion ($\epsilon$); for steel gears, it varies within

$C_{Fj} = (0,7...2,0) \cdot 10^4$,

$$c_{F_\epsilon} = (0,15...0,25) \cdot 10^6;$$

$C_{Hj}$, $C_{H\epsilon}$ = proportionality factor which is taken into account when determining the local (contact) rigidity of the pair of gears participating in meshing in the j-th portion and in the involute meshing portion ($\epsilon$); for steel gears, it varies within

$C_{Hj} = (0,15...0,3) \cdot 10^5$,

$$c_{H_\epsilon} = (0,5...0,8) \cdot 10^5;$$

$l_\epsilon$ = length of the contact line in the involute portions, mm.

19

3. Gear drive with mixed gearing according to Claims 1, 2, characterized in that a portion (21) of a first profile flank (19), which portion is shaped as a tooth profile of circarc gearing, is located at the tip of a tooth (20), and a portion (22) of a second profile flank (23), which portion is shaped as a tooth profile of circarc gearing and is arranged on the opposite side relative to the axis of the profile of the tooth (20), is located at the root of the tooth (20); the deviation ($\delta_{\Sigma e}$) of the profile flank (19) of the tooth (20) which is participating in meshing in a portion (24) which is shaped approximately along an involute being substantially equal to the deviation ($\delta_{\Sigma N}$)of the profile flank (19) of the tooth (20) which is participating in meshing in the portion (21) which is shaped as a tooth profile of circarc gearing.

4. Gear drive with mixed gearing according to Claim 3, characterized in that a portion (27) of a profile flank (28), which portion is shaped as a tooth profile of circarc gearing and is located at the tip of a tooth (29), is connected to a portion (30) of the profile flank (28), which portion is shaped approximately along an involute, by way of a first curvilinear portion (31) whose curvature has the opposite sign in relation to the curvature of the tooth profile of circarc gearing, while a second portion (32) of a profile flank (33), which portion is shaped as a tooth profile of circarc gearing and is located at the root of the tooth (29), is connected to a portion (34) of the profile flank (33), which portion is shaped approximately along an involute, by way of a second curvilinear portion (.35) whose curvature has the opposite sign in relation to the curvature of the tooth profile of circarc gearing; the radius of curvature of the second curvilinear portion (35) being dimensioned to be greater than that of the first portion (31), from the ratio $0.2 \cdot m \leq \rho_{p2} \leq m$.

Herein the meanings are as follows:

m = module; $\rho_{p2}$ = radius of curvature of the second curvilinear portion which connects the portion which is shaped approximately along an involute to the portion at the root of the tooth, which portion is shaped in accordance with circarc gearing.

5. Gear drive with mixed gearing according to Claim 4, characterized in that the portion (14) of the profile flank (10) at the root of the tooth (4), which portion is shaped in accordance with the type of circarc gearing, is circumscribed with arcs of two circles which are gently conjugate with one another and which have centres of curvature $^0f_1$, $^0f_2$, which lie at a distance from one another which is calculated from the following formula:

$$ 1 = (0,3 \ldots 1,2)(\rho_{f_2} - \rho_a)\left(\frac{\Delta a'_w}{|\Delta a''_w|} \cdot \frac{\sin\alpha_{max} - \sin\alpha_N}{\sin\alpha_N - \sin\alpha_{min}} - 1\right), $$

Herein the meanings are as follows:

l = spacing between the centres of curvature of the conjugate arcs of the profile portion at the root of the tooth, which spacing is measured along the total normals from the centre of curvature of the arc of the profile portion at the root of the tooth which is located nearer the tooth base: where l > 0 it is measured in the direction from the tooth profile, and where l < 0 it is measured in the direction towards the tooth profile;

$\rho_{f_2}$ = radius of curvature of the arc of the portion of the profile at the root of the tooth located nearer the tooth base;

$\rho_a$ = radius of curvature of the portion of the profile at the tip of the tooth;

$\Delta a'_w$ = value of the axial spacing error of the gear drive in the direction of increase in distance;

$\Delta a''_w$ = value of the axial spacing error of the gear drive in the direction of reduction in distance;

$\alpha_N$ = pitch circle pressure angle of the portion which is shaped as a tooth profile of circarc gearing, at

20

the point of contact;

$\alpha_{max}$ = maximum value of the pitch circle pressure angle of the portion at the tip of the tooth, which portion is shaped as a tooth profile of circarc gearing;

$\alpha_{min}$ = minimum value of the pitch circle pressure angle of the portion at the root of the tooth, which portion is shaped as a tooth profile of circarc gearing.

**Revendications**

1.  Engrenage à denture mixte constitué de roues d'engrenage (1, 3) dont chaque flanc de profil (5, 10) de dent (2, 4) présente une partie (6, 11) de son profit taillée approximativement en développante, qui se trouve dans une première zone qui contient le cercle primitif (7, 12) de la roue dentée (1, 3) et qui est reliée à au moins une partie de profit taillée avec un profit de dent à denture Nowikow située dans une deuxième zone placée hors de la première zone, caractérisé en ce que le flanc (5, 10) de profit de dent (2, 4) venant en prise présente, au moins pour deux parties de profit (6, 8, 11, 14), une correction par rapport au flanc (15, 16) du profit théorique de dent en direction de l'augmentation d'épaisseur de dent (2, 4) venant en prise.

2.  Engrenage à denture mixte selon la revendication 1, caractérisé en ce que la différence des corrections totales ($\delta$) dans les parties (9, 13, 6, 11) des flancs (5, 10) du profit des dents en prise, par rapport aux flancs de leur profit théorique (2, 4) est déterminée en correspondance à la relation suivante:

$$\delta = \frac{F_j^{0,7}}{\cos \alpha_j} \cdot \left(\frac{1}{C_{Fj} \cdot m} + \frac{1}{C_{Hj} \cdot m^{1/3}}\right) - \frac{F_\epsilon}{\cos \alpha_\epsilon} \cdot \left(\frac{1}{C_{F\epsilon} \cdot m} + \frac{1}{C_{H\epsilon} \cdot 1_c}\right)$$

pour laquelle:

$\delta$   représente la différence totale de correction des flancs de profit des $j^{\text{ième}}$ parties de profit d'engrènement des dents en prise et de leurs parties de profil en développante ($\epsilon$), mesurée sur la section normale des dents par rapport à ta ligne de pas sur une surface se raccordant à l'une des roues dentées, en mm;

$F_j$   signifie la force normale qui est supportée par un couple de denture venant en prise sur la $j^{\text{ième}}$ partie de profit, déterminée en fonction de la géométrie des roues dentées, de leurs matériaux, de ta technique de traitement thermique et d'usinage finat, du diagramme des contraintes extérieures cyliques, en N;

$m$   = module, en mm;

$F_\epsilon$   = force normale qui est supportée par un couple d'engrenage en prise sur la partie de profit en développante; déterminée en fonction de la géométrie des roues dentées, de leurs matériaux, de la technique de traitement thermique et d'usinage finat, du diagramme des contraintes extérieures cycliques, en N;

$\alpha_j$   = angle de pression en section normale des dentures de la roue, d'après lequel est mesurée la différence $\delta$, au point de contact de la force résultante à la $j^{\text{ième}}$ partie de profil;

$\alpha_\epsilon$   = angle de pression, en section normale, des dents de la roue, d'après lequel est mesurée la différence $\delta$, au point de croisement avec le cercle primitif;

$C_{Fj}$,   $C_{F\epsilon}$ = facteur de proportionnalité qui est pris en considération en déterminant la rigidité totale (rigidité de flexion et de cisaillement) d'un couple d'engrenage venant en prise sur la $j^{\text{ième}}$ partie de profil et sur la partie de profil d'engrènement de la développante ($\epsilon$); ces facteurs variant entre:

$C_{Fj} = (0,7...2,0) \cdot 10^4$, $C_{F\epsilon} = (0,15...0,25) \cdot 10^6$

pour des roues d'engrenage en acier;

$C_{Hj}, C_{H\epsilon}$   = facteur de proportionnalité qui est pris en considération en déterminant la rigidité locale (de contact) d'un couple d'engrenage venant en prise sur la $j^{\text{ième}}$ partie de profit

EP 0 293 473 B1

et sur la partie en prise et en développante ($\epsilon$); ces facteurs variant entre:

$C_{Hj} = (0,15...0,3).10^5$, $C_{H\epsilon} = (0,5...0,8).10^5$

pour des roues d'engrenage en acier;

$l_c$ = longueur de la ligne de contact sur les parties de profil en développante, en mm.

3. Engrenage à denture mixte selon la revendication 1 ou 2, caractérisé en ce qu'il comporte une partie (21) taillée en denture Nowikow, sur un premier flanc (19) du profil en tête d'une dent (20), et une partie (22) réalisée à profil de dent à denture Nowikow et située du côté opposé à l'axe du profit de dent (20), d'un deuxième flanc (23) du profit en pied de dent (20), la correction ($\delta_{\Sigma\epsilon}$) du flanc (19) de la dent (20) en prise, sur la partie (24) taillée sensiblement en développante étant sensiblement égale à la correction ($\delta_{\Sigma N}$) du flanc de profil (19) de la dent en prise (20) sur la partie (21) taillée en profil de denture Nowikow.

4. Engrenage à denture mixte selon la revendication 3, caractérisé en ce qu'une partie (27) d'un flanc (28) de profit, taillée en profit à denture Nowikow et située en tête d'une dent (29) est reliée à une partie (30) d'un flanc (28) du profit sensiblement en développante, via une première partie de profit curviligne (31), cette courbure étant de sens opposé à celui de la courbure du profil de dent de la denture Nowikow, tandis qu'une deuxième partie (32) d'un flanc (33) du profit taillée, en profit de denture Nowikow et placée au pied de la dent (29), est reliée à une partie de profit (34) sensiblement en développante du flanc de profit (33) et située au pied de la dent (20) via une deuxième partie de profit curviligne (35) dont la courbure est de sens opposé à celui de la courbure du profit de denture de la denture Nowikow, le rayon de courbure de la deuxième partie de profit curviligne (35) étant supérieur à celui de la première partie de profil (31) et satisfaisant à la relation:

$$0,2.m \leq \rho_{p2} \leq m$$

où:

m est le module;

$\rho_{p2}$ est le rayon de courbure de la deuxième partie de profil curviligne qui relie, en pied de dent, la partie de profit taillée sensiblement en développante à la partie de profit taillée selon la denture Nowikow.

5. Engrenage à denture mixte selon la revendication 4, caractérisé en ce que la partie de profit (14) taillée selon le type Nowikow du flanc de profil (10) en pied de dent (4) est circonscrite par les arcs de deux cercles qui sont raccordés très progressivement l'un à l'autre et qui présentent des centres de courbure $O_{f1}$, $O_{f2}$, qui sont distants l'un de l'autre d'une longueur donnée par:

$$1 = (0,3...1,2)(\rho_{f2} - \rho_a)(\frac{\Delta a'_w}{|\Delta a''_w|} \cdot \frac{\sin \alpha_{max} - \sin \alpha_N}{\sin \alpha_N - \sin \alpha_{min}} -1)$$

où:

l est la distance du centre de courbure de l'arc de cercle conjugué de la partie de profil en pied de dent qui est mesurée le long de toutes les normales à partir du centre de courbure de celui des arcs de la partie de profil en pied de dent qui se trouve le plus proche de la base de la dent: si l > 0, il est mesuré dans la direction partant du profit de dent et si l < 0, il est mesuré dans la direction dirigée vers le profil de dent;

$\rho_{f2}$ représente le rayon de courbure de l'arc de la partie de profit en pied de dent qui est la plus proche de la base de la dent;

$\rho_a$ représente le rayon de courbure de la partie de profil en tête de dent;

$\Delta a'_w$ représente la valeur de l'erreur d'entraxe du couple d'engrenage dans le sens de l'excès d'entraxe;

$\Delta a''_w$ représente la valeur de l'erreur d'entraxe de l'engrenage dans le sens de la réduction d'entraxe;

$\alpha_N$ est l'angle de pression d'engrènement de la partie de profit taillée en denture Nowikow au

22

point de contact;

$\alpha_{max}$ est ta valeur maximale de l'angle de pression d'engrènement de la partie de profil à denture Nowikow en tête de dent;

$\alpha_{min}$ est la valeur minimale de l'angle de pression d'engrènement de la partie de profit à denture Nowikow en pied de dent.

FIG. 1

FIG. 6  FIG. 8   FIG. 7

FIG. 2  FIG. 4   FIG. 3

FIG. 5

FIG. 9

FIG. 12

FIG. 10

FIG. 11

EP 0 293 473 B1

FIG. 13

FIG. 14

FIG. 15